Europäisches Patentamt

**European Patent Office**

Office européen des brevets

(11) Veröffentlichungsnummer: **0 092 254**
**B1**

(12) **EUROPÄISCHE PATENTSCHRIFT**

(45) Veröffentlichungstag der Patentschrift :
11.12.85

(51) Int. Cl.⁴ : **A 61 C   7/00**

(21) Anmeldenummer : **83103884.9**

(22) Anmeldetag : **20.04.83**

(54) **Doppelschraube für einen kieferorthopädischen vierteiligen Aktivator.**

(30) Priorität : 21.04.82 DE 3214844

(43) Veröffentlichungstag der Anmeldung :
26.10.83 Patentblatt 83/43

(45) Bekanntmachung des Hinweises auf die Patenterteilung : 11.12.85 Patentblatt 85/50

(84) Benannte Vertragsstaaten :
**AT BE CH FR GB IT LI LU NL**

(56) Entgegenhaltungen :
DE-B- 2 703 820
DE-B- 2 741 188
F. ASCHER "Praktische Kieferorthopädie" 1968,
URBAN & SCHWARZENBERG, München, Berlin,
Wien, Seiten 110, 111
DIE QUINTESSENZ, Band 6, Juni 1972, Berlin, H.
SCHIENBEIN "Konstruktionsprinzipien kieferorthopädischer Schrauben (IV)", Seiten 95-102

(73) Patentinhaber : **Nardella, Alessandro**
**Eggensteiner Strasse 20**
**D-7513 Stutensee 1 (DE)**

(72) Erfinder : **Nardella, Alessandro**
**Eggensteiner Strasse 20**
**D-7513 Stutensee 1 (DE)**

(74) Vertreter : **Finck, Dieter et al**
**Patentanwälte v. Füner, Ebbinghaus, Finck Mariahilf-**
**platz 2 & 3**
**D-8000 München 90 (DE)**

## Beschreibung

Die Erfindung betrifft eine Doppelschraube für einen kieferorthopädischen vierteiligen Aktivator zur gleichzeitigen unabhängigen Aktivierung des Ober- und Unterkiefers mit einer ersten, dem Frontzahnabschnitt und Seitenzahnabschnitt des Oberkiefers zuzuordnenden Dehnschraube und einer zu ihr parallelen zweiten, dem Schneidezahngebiet und Seitenzahngebiet des Unterkiefers zuzuordnenden Dehnschraube und mit einem die beiden Schrauben vertikal zu ihren Achsen verbindenden Steg.

Eine derartige Doppelschraube ist in dem Buch von Professor Dr. Felix Ascher, « Praktische Kieferorthopädie », Urban & Schwarzenberg, München, Berlin, Wien, 1968, S. 110 und 111, beschrieben. Diese Schraube wird dann verwendet, wenn die unterschiedliche Kompression im Ober- und Unterkiefer so stark ist, daß sich die notwendige Dehnung im oberen und unteren Seitenzahnbereich nur noch schwer mit üblichen Methoden beherrschen läßt. Die Doppelschraube hat zwei Schrauben, die durch einen starken Vertikalsteg miteinander verbunden sind. Die eine Schraube liegt im Frontzahnabschnitt des Oberkiefers, die andere im Schneidezahngebiet des Unterkiefers. Der Verbindungssteg ist nach der Gebißmitte ausgerichtet. Der Aufbau wird in die Wachsform des Aktivators eingelassen. Als Einzelschrauben werden die bei aktiven Dehnungsplatten eingesetzten Schrauben verwendet. Die Platte wird in der Mittellinie und parallel zur Kauebene durchtrennt, wobei die Aufbißrille für die unteren Schneidezähne bei dem Unterkieferanteil der Plattenkonstruktion verbleibt. Es entstehen vier Teile, die durch den erwähnten Vertikalsteg zusammengehalten werden.

Die bekannte Doppelschraube hat den Nachteil, daß einerseits die Aktivatorteile zum sicheren Einbetten der Doppelschraube sehr massiv ausgeführt werden müssen, was den freien Zungenraum einschränkt, und daß andererseits durch die vorgegebene Größe des Vertikalstegs bei kleineren Kiefern die Doppelschraube weiter vor den Frontzähnen angeordnet werden muß, was das Zungenbett weiter verkleinert.

Die der Erfindung zugrundeliegende Aufgabe besteht darin, die Doppelschraube der eingangs genannten Art so zu verbessern, daß unter Verwendung von Aktivatorteilen mit geringerem Materialaufwand ein universeller Einsatz der Doppelschraube unabhängig von der Kiefergröße so nahe wie möglich an den Frontzähnen erreichbar ist, um den Zungenraum so wenig wie möglich zu beschränken.

Diese Aufgabe wird bei der Doppelschraube der eingangs genannten Art dadurch gelöst, daß der Steg zweiteilig ausgebildet ist und die Stegteile durch ein Gelenk miteinander verbunden sind, dessen Schwenkachse parallel zu den Schraubenachsen verläuft, wobei die eingestellte Schwenkstellung der Stegteile festlegbar ist.

Die erfindungsgemäße Doppelschraube hat den Vorteil, daß sie äußerst vielfältig verwendet werden kann und zudem ein überraschend großer Zungenraum freibleibt.

Ein glatter zweiteiliger Steg mit Gelenk ergibt sich durch eine Bauweise, bei welcher der Stegteil der einen Schraube einen Vorsprung mit einer Bohrung und der Stegteil der anderen Schraube zwei mit jeweils einer Bohrung versehene Ansätze aufweist, die seitlich am Vorsprung anliegend angeordnet sind, wobei sich durch die Bohrungen eine Kopfschraube erstreckt und wenigstens die Bohrung des dem Schraubenkopf gegenüberliegenden Ansatzes ein dem Schraubengewinde entsprechendes Innengewinde aufweist.

Die Stegteile sind vorteilhafterweise miteinander in einem Winkel von 70 bis 270° einstellbar. Mit dieser Winkelvariabilität läßt sich eine günstige Anpassung an die jeweils vorgegebene anatomische Situation der Konkavität des vorderen Abschnitts des Mundraums erreichen.

Die universelle Verwendung der erfindungsgemäßen Doppelschraube ergibt sich weiterhin dadurch, daß von den Dehnschrauben wenigstens eine eine transversal gleichwirkende einstellbare Schraube sein kann. Weiterhin kann von den Dehnschrauben wenigstens eine ein reziprok einstellbares Sektorenschraubenpaar sein. Die Doppelschraube kann also transversal gleichwirkende Dehnschrauben oder reziprok einstellbare Sektorenschraubenpaare oder eine Kombination dieser Dehnschrauben aufweisen.

Die erfindungsgemäße Doppelschraube ermöglicht aufgrund der vertikalen einstellbaren und festlegbaren Abwinkelung die Schaffung eines grazilen Zungenbetts. In der Transversalen besteht die Möglichkeit, Veränderungen der Zahnstellung in jedem Quadrant isoliert durchzuführen und zwar mit einer gezielt gut dosierbaren Kraft bei einer Verankerung von zwei Drittel der Doppelschraube. Die erfindungsgemäße Doppelschraube gibt somit die Möglichkeit, den Gegebenheiten der jeweils vorliegenden Situation individuell gerecht zu werden.

Anhand der Zeichnung wird die Erfindung beispielsweise näher erläutert. Es zeigt :

Figur 1 eine Draufsicht auf eine erste Ausführungsform einer Doppelschraube,

Figur 2 eine Draufsicht auf eine zweite Ausführungsform einer Doppelschraube,

Figur 3 in einer Seitenansicht einer Doppelschraube die Schwenkbarkeit der Stegteile zueinander,

Figur 4 die Anordnung der Doppelschraube eingebettet in die Aktivatorteile in einem mediosagittalen Schnitt,

Figur 5 die Doppelschraube mit den Einbettungs-Aktivatorteilen und

Figur 6 die mit der Doppelschraube versehenen Aktivatorteile in einer dorsalen Ansicht.

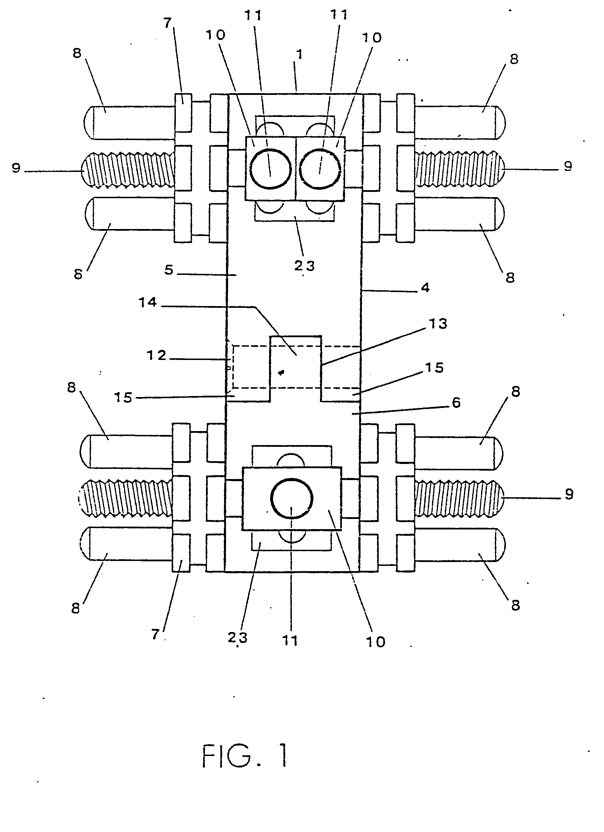

Die in Fig. 1 gezeigte Doppelschraube 1 hat einen Steg 4, der aus einem Stegteil 5 und einem Stegteil 6 besteht.

Das Stegteil 5 hat einen Retentionskörper 7. Der Retentionskörper 7 hat auf jeder Seite zwei im Abstand voneinander angeordnete, zur Längserstreckung des Stegteils 5 im wesentlichen senkrechte Haltestifte 8. Das Stegteil 6 ist in gleicher Weise mit einem Retentionskörper 7 und Haltestiften 8 versehen.

Jeder der Retentionskörper hat zwischen den Haltestiften 8 eine Gewindebohrung für die Aufnahme einer Dehnschraube 9, deren Schraubenkopf 10 mit Stelloch 11 in einer Aussparung 23 im Stegteil 5 bzw. Stegteil 6 angeordnet ist. Die Gewindegänge der Dehnschrauben 9 sind zu beiden Seiten des Schraubenkopfes 10 gegenläufig.

Bei dem in Fig. 1 gezeigten Ausführungsbeispiel ist dem zweiten Stegteil 6 eine Transversalschraube mit einem einzigen Schraubkopf 10 zugeordnet, während dem Stegteil 5 als Dehnschraube ein Sektorenschraubenpaar mit zwei Schraubköpfen 10 zugeordnet ist, von denen jeder ein Stelloch 11 aufweist. Das Sektorenschraubenpaar des Stegteils 5 ermöglicht eine reziproke Einstellung, die Dehnschraube 9 des Stegteils 6 eine transversale Einstellung.

Das Stegteil 5 hat auf seiner Längserstreckung auf der den Retentionskörper 7 aufnehmenden gegenüberliegenden Seite zwei Ansätze 15, durch die eine koaxiale Bohrung hindurchgeht, die mit einem Innengewinde versehen ist. Das Stegteil 6 hat auf seiner Längserstreckung auf der Seite, die der Aufnahmeseite des Retentionskörpers 7 gegenüberliegt, einen Vorsprung 14 mit einer Bohrung. Wenn der Vorsprung 14 zwischen den Ansätzen 15 angeordnet ist, fluchten die Bohrungen, so daß eine Senkschraube 12 eingeschraubt werden kann, wodurch das Gelenk 13 gebildet wird. Die jeweilige Gelenkstellung wird durch Festziehen der Senkschraube 12 fixiert.

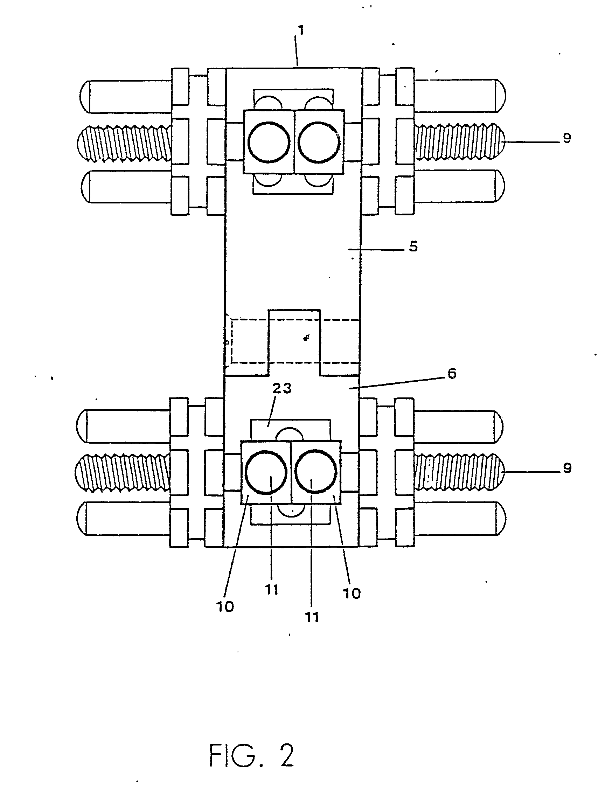

Die in Fig. 2 gezeigte Ausführungsform der Doppelschraube entspricht der Ausführungsform von Fig. 1, mit der Ausnahme, daß die dem Stegteil 6 zugeordnete transversale Dehnschraube 9 von Fig. 1 durch eine weitere reziproke Dehnschraube, also durch ein Sektorenschraubenpaar ersetzt ist, wie dies in Fig. 1 bei dem Stegteil 5 der Fall ist, wobei zwei Schraubenköpfe 10 jeweils mit einem Stellloch 11 vorgesehen sind.

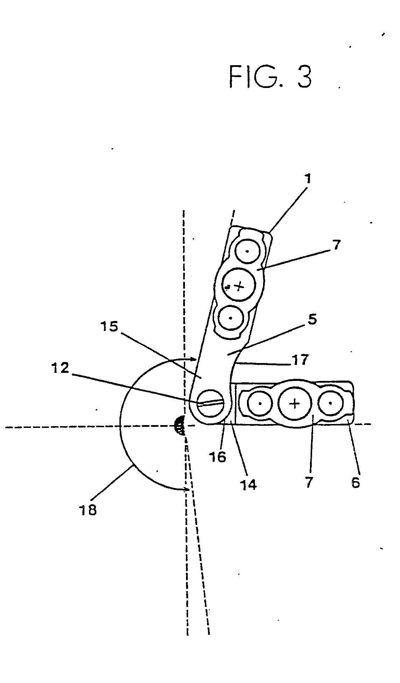

Fig. 3 zeigt die Doppelschraube 1 in der einen Endstellung, in welcher die Stegteile 5 und 6 zwischen sich einen Winkel von 70° bilden. Ausgehend von dieser einen Stellung, in der das Stegteil 6 festgehalten sein soll, kann das Stegteil 5 in Richtung des Bogens 18 in Fig. 3 um 200° verschwenkt werden. Diese Verschwenkbereiche sind aufgrund der Rundungen 16 und 17 am Stegteil 5 möglich. Der Schwenkbereich, in dem die Stegteile 5 und 6 zueinander verschwenkbar sind, reicht somit von 70 bis 270°.

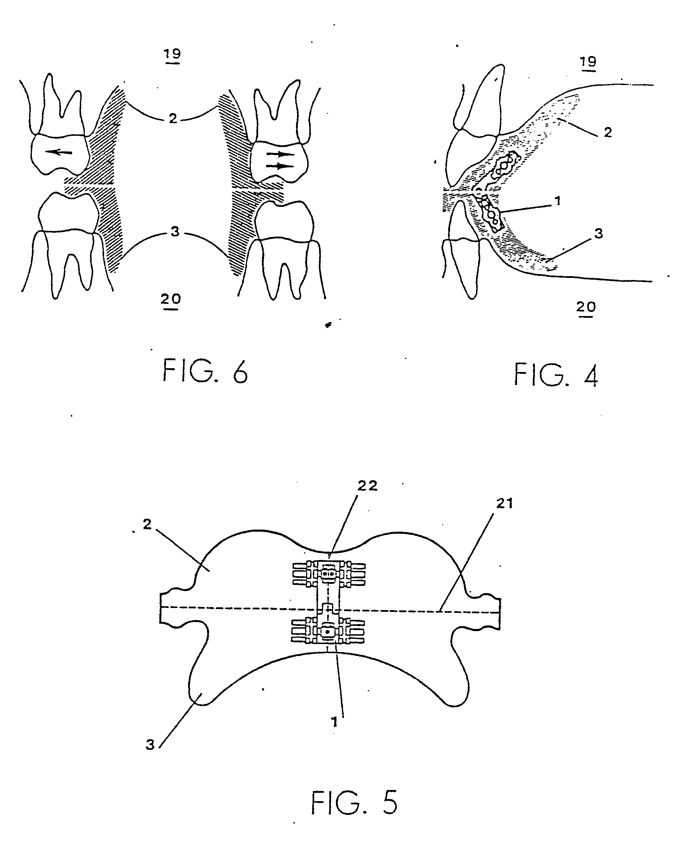

Die Doppelschraube 1 wird, wie dies beispielsweise in Fig. 5 gezeigt ist, in die Aktivatorteile 2 und 3 eingebettet, die durch eine horizontale Trennlinie 21 voneinander getrennt sind. Jedes der Aktivatorteile 2 und 3 ist längs einer vertikalen Trennlinie 22 unterteilt, so daß sich ein vierteiliger Aktivator ergibt. Die Trennlinie 22 befindet sich in der Trennebene der Doppelschraube 1 bezüglich der transversalen bzw. reziproken Einstellung. Die Anordnung der Doppelschraube 1 mit den Aktivatorteilen 2 und 3 im Mund zwischen dem Oberkiefer 19 und dem Unterkiefer 20 ist in Fig. 4 und 6 gezeigt. Aus Fig. 4 ist ersichtlich, daß der zur Verfügung stehende freie Zungenraum überraschend groß ist. Bei der Anordnung des Aktivators, wie sie aus Fig. 6 ersichtlich ist, kann im Bereich des Oberkiefers 19 eine transversale oder reziproke Einstellung der jeweiligen, entsprechend ausgebildeten Dehnschraube 9 vorgenommen werden, was auch für den dem Unterkiefer 20 zugeordneten Aktivatorteil gilt.

## Patentansprüche

1. Doppelschraube (1) für einen keiferorthopädischen, vierteiligen Aktivator (2, 3) zur gleichzeitigen unabhängigen Aktivierung des Ober- und Unterkiefers (19, 20) mit einer ersten, dem Frontzahnabschnitt und Seitenzahnabschnitt des Oberkiefers zuzuordnenden Dehnschraube (9) und einer zu ihr parallelen zweiten, dem Schneidezahngebiet und Seitenzahngebiet des Unterkiefers zuzuordnenden Dehnschraube (9) und mit einem die beiden Schrauben vertikal zu ihren Achsen verbindenden Steg (4), dadurch gekennzeichnet, daß der Steg (4) zweiteilig ausgebildet ist und die Stegteile (5, 6) durch ein Gelenk (13) miteinander verbunden sind, dessen Schwenkachse parallel zu den Schraubenachsen verläuft, wobei die eingestellte Schwenkstellung der Stegteile (5, 6) festlegbar ist.

2. Doppelschraube nach Anspruch 1, dadurch gekennzeichnet, daß der Stegteil (6) der einen Dehnschraube (9) einen Vorsprung (14) mit einer Bohrung und der Stegteil (5) der anderen Dehnschraube (9) zwei mit jeweils einer Bohrung versehene Ansätze (15) aufweist, die seitlich am Vorsprung (14) anliegend angeordnet sind, wobei sich durch die Bohrungen eine Kopfschraube (12) erstreckt und wenigstens die Bohrung des dem Schraubenkopf gegenüberliegenden Ansatzes (15) ein mit dem Schraubengewinde entsprechendes Innengewinde aufweist.

3. Doppelschraube nach Anspruch 1 oder 2, dadurch gekennzeichnet, daß die Stegteile (5, 6) miteinander in einem Winkel von 70 bis 270° einstellbar sind.

4. Doppelschraube nach einem der Ansprüche 1 bis 3, dadurch gekennzeichnet, daß von den Dehnschrauben (9) wenigstens eine eine transversal gleichwirkende einstellbare Schraube ist.

5. Doppelschraube nach einem der Ansprüche 1 bis 4, dadurch gekennzeichnet, daß von den Dehnschrauben (9) wenigstens eine ein reziprok einstellbares Sektorenschraubenpaar ist.

## Claims

1. A double screw (1) for a gnatho-orthopaedic, four-part activator (2, 3) for the simultaneous independent activation of the upper and lower jaw (19, 20) with a first expansion screw (9) to be associated with the anterior tooth portion and the lateral tooth portion of the upper jaw, and a second expansion screw (9), parallel with it, to be associated with the incisor area and the posterior tooth area of the lower jaw, and with a strap (4) binding both screws vertically to their axes, characterised in that the strap (4) is constructed in two parts and that the parts of the strap (5, 6) are joined together by a hinge (13) the pivoting axis of which extends parallel with the axes of the screws, it being possible to adjust the set swivelling position of the strap parts (5, 6).

2. A double screw according to Claim 1, characterised in that the strap part (6) of one expansion screw (9) has a projection (14) with a perforation, and the strap part (5) of the other expansion screw (9) has two lugs (15) each provided with a perforation, which lugs are arranged to lie laterally on the projection (14), a cap screw (12) extending through the perforations and at least the perforation of the lug (15) situated opposite to the cap of the screw having an inner thread corresponding to the screw thread.

3. A double screw according to Claim 1 or 2, characterised in that the strap parts (5, 6) are adjustable to form together an angle of 70 to 270°.

4. A double screw according to one of Claims 1 to 3, characterised in that, of the expansion screws (9), at least one is an adjustable screw operating evenly transversally.

5. A double screw according to one of Claims 1 to 4, characterised in that, of the expansion screws (9), at least one is a pair of mutually adjustable sector screws.

## Revendications

1. Vis double (1) pour un activateur (2, 3) en quatre parties d'orthopédie maxillaire destinée à activer simultanément et de manière indépendante la mâchoire supérieure et la mâchoire inférieure (19, 20), comprenant une première vis d'extension (9) associée à la zone des incisives et à la zone des molaires de la mâchoire supérieure, et une deuxième vis d'extension (9) parallèle à la première, associée à la zone des incisives et à la zone des molaires de la mâchoire inférieure, et comportant une barrette (4) assemblant les deux vis perpendiculairement à leurs axes respectifs, caractérisée par le fait que la barrette (4) est formée de deux parties et que les deux parties de la barrette (5, 6) sont assemblées par une articulation (13), dont l'axe de pivotement s'étend parallèlement aux axes des vis, la position de pivotement pré-réglée des pièces de barrettes (5, 6) pouvant être bloquée.

2. Vis double selon la revendication 1, caractérisée par le fait que la patie de barrette (6) de l'une des vis d'extension (9) présente une saillie (14) munie d'un perçage et que la partie de barrette (5) de l'autre vis d'extension (9) présente deux butées (15) munies respectivement d'un perçage, butées (15) disposées latéralement pour venir en contact avec la saillie (14), tandis qu'une vis à tête (12) s'étend à travers lesdits perçages et qu'au moins le perçage de la butée (15) faisant face à la tête de vis présente un filetage intérieur correspondant au filetage de la vis.

3. Vis double selon la revendication 1, ou 2, caractérisée par le fait que les parties de barrette (5, 6) sont réglables de manière à former entre elles, un angle de 70 à 270°.

4. Vis double selon l'une des revendications 1 à 3, caractérisée par le fait qu'au moins une des deux vis d'extension (9) est une vie réglable de manière à obtenir une action transversale équivalente.

5. Vis double selon l'une des revendications 1 à 4, caractérisée par le fait que des deux vis d'extension (9) l'une au moins est une paire de vis dont le réglage réciproque s'effectue au moyen d'un secteur denté.

FIG. 1

FIG. 2

FIG. 3

FIG. 6

FIG. 4

FIG. 5